# EUROPÄISCHE PATENTSCHRIFT

(11) **EP 3 912 760 B1**
(45) Veröffentlichungstag und Bekanntmachung des Hinweises auf die Patenterteilung: **15.11.2023**
(21) Anmeldenummer: 20175859.6
(22) Anmeldetag: 20.05.2020
(51) Int. Cl.: B24C 3/06, B24C 7/00, B24C 9/00, B24C 11/00

(54) **VERFAHREN ZUM DRUCKLUFTSTRAHLEN MIT FESTEM STRAHLMITTEL**
METHOD FOR BLASTING WITH SOLID BLASTING AGENT
PROCÉDÉ DE JET D'AIR COMPRIMÉ À L'AIDE D'UN AGENT DE GRENAILLAGE SOLIDE

(43) Veröffentlichungstag der Anmeldung: 24.11.2021
(73) Patentinhaber: Omya International AG, 4665 Oftringen (CH)
(72) Erfinder: Neukam, Bernhard, 8046 Stattegg (AT); Neubacher, Julian, 8010 Graz (AT); Kremer, Hartmut, 9241 Wernberg (AT); Wimmer, Michael, 2340 Mödling (AT)
(74) Vertreter: KLIMENT & HENHAPEL

(56) Entgegenhaltungen:
- DE-C1- 10 102 924
- RU-C- 1 794 416
- US-A1- 2007 042 676
- US-A1- 2013 029 563
- US-A1- 2017 259 401

## Beschreibung

### GEBIET DER ERFINDUNG

Die vorliegende Erfindung betrifft ein Verfahren gemäß dem Oberbegriff des unabhängigen Anspruchs 1 zum Druckluftstrahlen mit mindestens einem festen Strahlmittel, um mindestens eine Oberfläche zu behandeln, insbesondere um die mindestens eine Oberfläche von Verunreinigung zu reinigen.

### STAND DER TECHNIK

Durch Druckluftstrahlen mit festem Strahlmittel, umgangssprachlich auch als "Sandstrahlen" bezeichnet, können Oberflächen von Verunreinigung wie z.B. Rost, alter Farbe, Algen und dergleichen mehr gereinigt werden, vgl. etwa https://de.wikipedia.org/wiki/Sandstrahlen. Als Strahlmittel kommen nach dem Stand der Technik Sande, Hochofen- und Schmelzkammerschlacken, Glasgranulat, Korund, Stahlguss kantig, Kunststoffgranulat, Nussschalen, Soda und Trockeneis in den unterschiedlichsten Feinheitsgraden zum Einsatz. Das Strahlmittel trifft zusammen mit einem Luftstrahl mit entsprechend hoher Geschwindigkeit auf die zu behandelnde Oberfläche. Auf Grund der abrasiven Wirkung des auftretenden Strahlmittels werden die zu entfernenden Substanzen gelöst und gemeinsam mit dem Luftstrahl und dem Strahlmittel abtransportiert. Dabei werden häufig Rücksaugsysteme zur teilweisen Rückgewinnung des Strahlmittels verwendet.

Ein solches Verfahren ist aus US 2013/029563 A1 bekannt, das den nächstliegenden Stand der Technik ist. Nachteilig wirkt sich bei manchen Anwendungen die hohe Aggressivität bzw. hohe abrasive Wirkung auf die zu behandelnde Oberfläche aus. Ein Beispiel hierfür sind Fassaden. Moderne Fassaden sind überwiegend gut gedämmt - das hilft Energie zu sparen, verursacht aber insbesondere in der Übergangszeit von Tag auf Nacht bzw. umgekehrt Taubildung an der Fassade, welche wiederum das biogene Wachstum begünstigt. So werden aus gut gedämmten Fassaden nach wenigen Jahren unansehnliche Flächen, auf denen Algen gedeihen. Auch bei historischen Gebäuden, Vollholz- und Teilholzbauten sowie diversen Fassadensystemen kommt es im Laufe der Jahre zu erheblicher Verschmutzung und oberflächlicher Verwitterung, welche periodisch, möglichst schonend entfernt werden müssen. Während Nass-Reinigungen mit Chemikalien Boden und Fassade nachhaltig schädigen, sind Trockenverfahren wie eben das Sandstrahlen zu aggressiv.

Die genannte Problematik gewinnt ständig an Bedeutung, da nicht zuletzt durch Umwelteinwirkungen wie Ruß, Stickstoff- und Schwefelverbindungen (verursacht durch Verkehr, Industrie und Hausbrand), aber auch durch Vogelkot ein wachsender Bedarf an Oberflächenreinigung entsteht. Besonders kritisch ist die Situation im Bereich des Denkmalschutzes, z.B. bei der Restaurierung von historischen Fassaden, wo möglichst substanzerhaltende ("sanfte") Verfahren gefordert sind. Schließlich ist auch der Energieverbrauch bei der Oberflächenbehandlung mit bekannten Verfahren ein Punkt, der dem Trend der Zeit folgend als verbesserungswürdig anzusehen ist.

### AUFGABE DER ERFINDUNG

Es ist daher Aufgabe der vorliegenden Erfindung, ein Verfahren zum Druckluftstrahlen mit festem Strahlmittel zur Verfügung zu stellen, die die oben geschilderten Nachteile vermeiden. Insbesondere soll die Reinigung von relativ empfindlichen Oberflächen, wie beispielsweise von Fassaden, ermöglicht werden, ohne dass diese Oberflächen beschädigt werden. Diese Aufgabe wird durch ein Verfahren zum Druckluftstrahlen mit den Merkmalen des Patentanspruchs 1 gelöst. Vorteilhafte Ausgestaltungen mit zweckmäßigen Weiterbildungen der Erfindung sind in den abhängigen Patentansprüchen angegeben

### DARSTELLUNG DER ERFINDUNG

Kern der vorliegenden Erfindung ist die Erkenntnis, dass die zu hohe Aggressivität bzw. zu hohe abrasive Wirkung auf die zu behandelnde Oberfläche bei bekannten Verfahren auf zu hohe Geschwindigkeiten, mit denen die Strahlmittel auf die Oberfläche geblasen werden und letztlich dort auftreffen, zurückzuführen ist. Besagte Geschwindigkeiten liegen bei bekannten Verfahren typischerweise im Bereich von 150 m/s und sind notwendig, damit die Druckluft die Strahlmittel mitreißen und transportieren kann. Zur Realisierung von geringeren Geschwindigkeiten sind daher erfindungsgemäß leichtere Strahlmittel vorgesehen. Entsprechend ist es daher bei einem Verfahren zum Druckluftstrahlen mit mindestens einem festen Strahlmittel, um mindestens eine Oberfläche zu behandeln, insbesondere um die mindestens eine Oberfläche von Verunreinigung zu reinigen, erfindungsgemäß vorgesehen, dass als das mindestens eine feste Strahlmittel mindestens ein Leichtstoffgranulat mit Leichtstoffgranulatpartikeln verwendet wird, wobei die Leichtstoffgranulatpartikel eine hohle und/oder schaumartige Struktur aufweisen. Solche Leichtstoffgranulate sind hinreichend leicht und weisen eine entsprechend kleine Schüttdichte auf, was wiederum deutlich niedrigere Geschwindigkeiten der Leichtstoffgranulatpartikel im Vergleich zu bekannten Strahlmitteln beim Druckluftstrahlen erlaubt.

Zur resultierenden "Sanftheit" des erfindungsgemäßen Verfahrens trägt nicht nur die reduzierte Austritts- bzw. Aufschlagsgeschwindigkeit des Leichtstoffgranulats bei, sondern auch die geringere Masse bzw. Dichte der Strahlmittelpartikel.

Es sei bemerkt, dass durch den Einsatz von Leichtstoffgranulatpartikel auch der Problematik des Energieverbrauchs Rechnung getragen wird. Zum einen wird durch das vergleichsweise leichtere Strahlmittel schon beim Transport desselben zum Einsatzort aufgrund des geringeren Transportgewichts signifikant Energie eingespart. Zum anderen ist der Energieverbrauch für das Beschleunigen und Fördern der Leichtstoffgranulatpartikel beim eigentlichen Druckluftstrahlen deutlich geringer als bei bekannten Verfahren mit bekannten Strahlmitteln.

Die Behandlung der mindestens einen Oberfläche muss nicht zwangsläufig eine Reinigung sein. Alternativ oder zusätzlich können auch andere Effekte erzielbar sein, beispielsweise eine Änderung der Rauheit der Oberfläche durch Umformen (auch als "Oberflächenveredelungsstrahlen" bezeichnet) oder eine Änderung der Eigenschaft einer im Bereich der Oberfläche angeordneten Materialschicht, die die Oberfläche umfasst (auch als "Verfestigungsstrahlen" bezeichnet).

Es können entweder ein sortenreines Leichtstoffgranulat oder mehrere Leichtstoffgranulate unterschiedlicher Sorten gemeinsam verwendet werden.

Bei einer bevorzugten Ausführungsform des erfindungsgemäßen Verfahrens ist vorgesehen, dass das mindestens eine Leichtstoffgranulat mindestens einen expandierten, insbesondere geschlossenzellig expandierten, Perlitsand und/oder mindestens ein Blähglas und/oder mindestens ein Glasschaumgranulat und/oder Flugasche-Cenosphären und/oder synthetische Glashohlkugeln umfasst. Diese Leichtstoffgranulate sind hinreichend leicht. Mittels der unterschiedlichen Leichtstoffgranulate lässt sich weiters ein großer Bereich von Durchmessern kleiner als 2 mm, insbesondere kleiner als 500 pm, abdecken.

Geblähter/expandierter Perlitsand (vgl. z.B. EP 2697181 B1) sowie Blähglas (vgl. z.B. EP 2708517 B1) erweisen sich als besonders vorteilhaft, da sich deren Oberflächenbeschaffenheit, insbesondere Geschlossenzelligkeit, gezielt einstellen lässt, was sich wiederum auf die mechanischen Eigenschaften, insbesondere auf die Druckfestigkeit, der geblähten Partikel auswirkt.

Kürzlich hat sich gezeigt, dass sich bei geschlossenzellig geblähtem Perlitsand auch die Schüttdichte gezielt einstellen lässt, was einen weiteren besonderen Vorteil dieses Leichtstoffgranulats darstellt und eine annähernd optimale Anpassung auf unterschiedliche Anwendungen ermöglicht. Die Druckfestigkeit des Leichtstoffgranulats ist dabei proportional zu dessen Schüttdichte.

Bei synthetischen Glashohlkugeln lässt sich zwar prinzipiell auch die Dichte und/oder Druckfestigkeit variieren, doch ist der Größenbereich sehr stark eingeschränkt, insbesondere auf Durchmesser kleiner als 125 µm. Darüberhinaus sind synthetische Glashohlkugeln wesentlich teurer als geblähter Perlitsand.

Entsprechend dem oben Gesagten ist es bei einer bevorzugten Ausführungsform des erfindungsgemäßen Verfahrens vorgesehen, dass das Leichtstoffgranulat eine Schüttdichte von kleiner gleich 500 g/l, bevorzugt im Bereich von 30 g/l bis 300 g/l, besonders bevorzugt im Bereich von 150 g/l bis 200 g/l, aufweist.

Darüberhinaus werden die zu behandelnden Oberflächen geschont, indem, vorzugsweise durch Wahl der geeigneten Schüttdichte, die Druckfestigkeit besagter Leichtstoffgranulatpartikel hinreichend klein, insbesondere im Vergleich zu bekannten Strahlmitteln geringer, ist. D.h. selbst wenn die Geschwindigkeit der Leichtstoffgranulatpartikel höher als optimal gewählt wird, kann eine Beschädigung der zu behandelnden Oberfläche weitgehend vermieden werden, da in diesem Fall die kinetische Energie quasi als Sicherung durch Zerstörung der Leichtstoffgranulatpartikel abgebaut wird. Entsprechend ist es bei einer bevorzugten Ausführungsform des erfindungsgemäßen Verfahrens vorgesehen, dass das Leichtstoffgranulat eine Druckfestigkeit von kleiner gleich 7 N/mm² aufweist.

Grundsätzlich kann für jede Anwendung eine optimale Körnung gefunden werden. Bei einer bevorzugten Ausführungsform des erfindungsgemäßen Verfahrens ist vorgesehen, dass die Leichtstoffgranulatpartikel eine Korngröße von kleiner gleich 600 pm, bevorzugt eine Korngröße im Bereich von 100 µm bis 550 pm, besonders bevorzugt eine Korngröße im Bereich von 100 µm bis 400 pm, aufweisen. Es zeigt sich, dass durch diese Wahl ein breites Spektrum an Anwendungen abgedeckt werden kann.

Bei einer bevorzugten Ausführungsform des erfindungsgemäßen Verfahrens ist vorgesehen, dass Druckluft mit einem Überdruck im Bereich von 2 bar bis 4 bar, vorzugsweise von 2,5 bar bis 3,5 bar, verwendet wird. Durch diese Wahl des Überdrucks der Druckluft lassen sich hinreichend geringe Geschwindigkeiten der Leichtstoffgranulatpartikel realisieren, welche von der Druckluft mitgerissen und transportiert werden. Dies geht einher mit Einsparungen sowohl bei der Druckluft als auch beim Strahlmittel, d.h. beim Leichtstoffgranulat. Im Vergleich dazu, liegt der Überdruck bei bekannten Verfahren im Bereich von 6 bar.

Wie gesagt, können beim erfindungsgemäßen Verfahren hinreichend geringe Geschwindigkeiten der Leichtstoffgranulatpartikel beim Druckluftstrahlen realisiert werden, die deutlich geringer sind als bei bekannten Verfahren. Entsprechend ist es bei einer bevorzugten Ausführungsform des erfindungsgemäßen Verfahrens vorgesehen, dass die Leichtstoffgranulatpartikel eine Geschwindigkeit im Bereich von 90 m/s bis 130 m/s, vorzugsweise von 99 m/s bis 121 m/s, aufweisen.

Erfindungsgemäß ist es vorgesehen, dass zumindest die Leichtstoffgranulatpartikel nach deren Auftreffen auf der mindestens einen Oberfläche abgesaugt und recycelt werden. D.h. die Leichtstoffgranulatpartikel können, insbesondere bei richtiger Wahl der Schüttdichte, zumindest zu einem guten Teil wiederverwendet werden, was die Umwelt schont und Kosten spart.

Nachdem die Leichtstoffgranulatpartikel auf der Oberfläche aufgetroffen sind, wird im Allgemeinen ein Materialstrom abgesaugt. Dieser Materialstrom kann außer Luft, optimalerweise überwiegend, unzerstörte Leichtstoffgranulatpartikel umfassen, d.h. Leichtstoffgranulatpartikel, die beim Auftreffen nicht zerstört worden sind. Weiters kann der Materialstrom, optimalerweise nur wenige, zerborstene Leichtstoffgranulatpartikel umfassen, d.h. Leichtstoffgranulatpartikel, die durch das Aufprallen an der Oberfläche zerstört worden sind. Schließlich kann der Materialstrom auch noch (durch die Leichtstoffgranulatpartikel) abgetragenes Material umfassen, beispielsweise von der Oberfläche gelöste Verunreinigungspartikel.

Aufgrund der relativ niedrigen Geschwindigkeiten der Leichtstoffgranulatpartikel kann der Anteil an unzerstörten Leichtstoffgranulatpartikeln im Materialstrom sehr hoch gehalten werden, was das Recyceln wirtschaftlich macht. Zudem kann, wie oben erwähnt, die Druckfestigkeit des Leichtstoffgranulats entsprechend gewählt bzw. eingestellt werden, sodass der Anteil an unzerstörten, recycelbaren Leichtstoffgranulatpartikeln weiter erhöht wird.

Je nach Empfindlichkeit der zu behandelnden, insbesondere zu reinigenden, Oberfläche ist das Leichtstoffgranulat, insbesondere hinsichtlich seiner Dichte, vorzugsweise so zu wählen, dass höchstens 10%, bevorzugt höchstens 5%, der Leichtstoffgranulatpartikel beim Druckluftstrahlen zerstört werden, um eine gute Recyclingquote bei gleichzeitigem guten Behandlungserfolg sicherzustellen.

Es zeigt sich, dass sich Leichtstoffgranulatpartikel aus geschlossenzellig geblähtem Perlitsand ganz besonders gut für das Recyceln eignen, da diese, insbesondere im Hinblick auf Druckfestigkeit und Schüttdichte, so gezielt auf die zu behandelnde Oberfläche abgestimmt werden können, dass beim Druckluftstrahlen bzw. beim Behandeln der Oberfläche nur ein äußerst geringer Anteil der Leichtstoffgranulatpartikel zerstört wird.

Bei einer besonders bevorzugten Ausführungsform des erfindungsgemäßen Verfahrens ist vorgesehen, dass das Recyceln mittels mindestens eines Zyklons erfolgt, wobei zerborstene Leichtstoffgranulatpartikel mittels mindestens eines nachgeschalteten Filters als Abfall abgeschieden werden.

D.h. der Materialstrom wird im Zyklon im Wesentlichen in eine erste Fraktion mit den zerborstenen Leichtstoffgranulatpartikeln - insbesondere von Reingas mit den zerborstenen Leichtstoffgranulatpartikeln - und eine zweite Fraktion mit den unzerstörten Leichtstoffgranulatpartikeln und ggf. dem abgetragenen Material getrennt. Für die Wiederverwendung können die Leichtstoffgranulatpartikel aus der zweiten Fraktion aufbereitet bzw. können andere Stoffe (insbesondere abgetragenes Material) aus der zweiten Fraktion abgeschieden werden, z.B. mittels eines Siebs.

Der Filter ist dem Zyklon, insbesondere auf dessen Reingasseite, nachgeschaltet.

Es sei bemerkt, dass im Falle von Perlitsanden die zerborstenen Leichtstoffgranulatpartikeln bzw. die zerborstenen Perlitsandpartikel z.B. als Dünger weiter verwendet werden können, was einen weiteren Vorteil der Verwendung von Perlitsanden beim erfindungsgemäßen Verfahren darstellt. Zudem kann das Material praktisch überall als Nicht-Sondermüll deponiert werden.

Analog zum oben Gesagten ist bei einer Vorrichtung zum Druckluftstrahlen mit mindestens einem festen Strahlmittel, um mindestens eine Oberfläche zu behandeln, insbesondere um die mindestens eine Oberfläche von Verunreinigung zu reinigen, optional vorgesehen, dass die Vorrichtung zur Durchführung eines erfindungsgemäßen Verfahrens eingerichtet ist.

Zur Sicherstellung hinreichend kleiner Geschwindigkeiten der Leichtstoffgranulatpartikel ist es analog zum oben Gesagten bei einer bevorzugten Ausführungsform der Vorrichtung vorgesehen, dass mindestens ein Überdruckmittel, insbesondere mindestens ein Kompressor, zur Bereitstellung von Druckluft mit einem Überdruck im Bereich von 2 bar bis 4 bar, vorzugsweise von 2,5 bar bis 3,5 bar, vorgesehen ist, um mit der Druckluft die Leichtstoffgranulatpartikel auf eine Geschwindigkeit im Bereich von 90 m/s bis 130 m/s, vorzugsweise von 99 m/s bis 121 m/s, zu beschleunigen. Selbstverständlich können andere bekannte Überdruckmittel, etwa Druckluftreservoirs, alternativ oder zusätzlich ebenfalls vorgesehen sein.

Mit besagter Geschwindigkeit treten die Leichtstoffgranulatpartikel gemeinsam mit der Druckluft typischerweise aus einer Düse in Richtung der zu behandelnden Oberfläche aus und treffen in weiterer Folge mit im Wesentlichen dieser oder annähernd dieser Geschwindigkeit auf die Oberfläche. Genauer treten die Leichtstoffgranulatpartikel mit einer Austrittsgeschwindigkeit (auf diese werden sie durch die Druckluft beschleunigt) aus der Düse aus und treffen mit einer Auftreffgeschwindigkeit auf der Oberfläche auf. Wie stark sich die Auftreffgeschwindigkeit von der Austrittsgeschwindigkeit unterscheidet, hängt im Wesentlichen vom Abstand zwischen Düse und Oberfläche ab, wobei sich mit zunehmendem Abstand die Geschwindigkeit der Leichtstoffgranulatpartikel aufgrund des Luftwiderstands verringert.

Um das oben geschilderte Recyceln prinzipiell zu ermöglichen, ist es bei einer bevorzugten Ausführungsform der Vorrichtung vorgesehen, dass mindestens ein Saugkopf vorgesehen ist, um zumindest die Leichtstoffgranulatpartikel nach deren Auftreffen auf der mindestens einen Oberfläche abzusaugen. D.h. der Saugkopf dient zum Absaugen des oben erläuterten Materialstroms, der zumindest die Leichtstoffgranulatpartikel umfasst.

Um unzerstörte Leichtstoffgranulatpartikel aus dem Materialstrom wiederzugewinnen, sodass diese erneut für das Druckluftstrahlen eingesetzt werden können, ist es analog zum oben Gesagten bei einer besonders bevorzugten Ausführungsform der Vorrichtung vorgesehen, dass mindestens ein dem mindestens einen Saugkopf nachgeschalteter Zyklon und mindestens ein dem mindestens einen Zyklon nachgeschalteter Filter vorgesehen sind, um die Leichtstoffgranulatpartikel zu recyceln und zerborstene Leichtstoffgranulatpartikel als Abfall abzuscheiden. Gemäß dem oben Gesagten kann z.B. ein Sieb vorgesehen sein, um andere Stoffe (insbesondere abgetragenes Material) aus jener durch den Zyklon bereitgestellten Fraktion abzuscheiden, die die nicht zerborstenen Leichtstoffgranulatpartikel enthält.

Analog zum oben Gesagten ist optional ein System umfassend die Vorrichtung sowie das mindestens eine Leichtstoffgranulat vorgesehen.

Analog zum oben Gesagten ist es bei einer bevorzugten Ausführungsform des Systems vorgesehen, dass das mindestens eine Leichtstoffgranulat mindestens einen expandierten, insbesondere geschlossenzellig expandierten, Perlitsand und/oder mindestens ein Blähglas und/oder mindestens ein Glasschaumgranulat und/oder Flugasche-Cenosphären und/oder synthetische Glashohlkugeln umfasst

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: ein Fließschema einer Ausführungsform eines erfindungsgemäßen Verfahrens
- Fig. 2: eine Detailansicht eines Saugkopfs aus Fig. 1
- Fig. 3: eine Detailansicht eines Materialstroms aus Fig. 2

### WEGE ZUR AUSFÜHRUNG DER ERFINDUNG

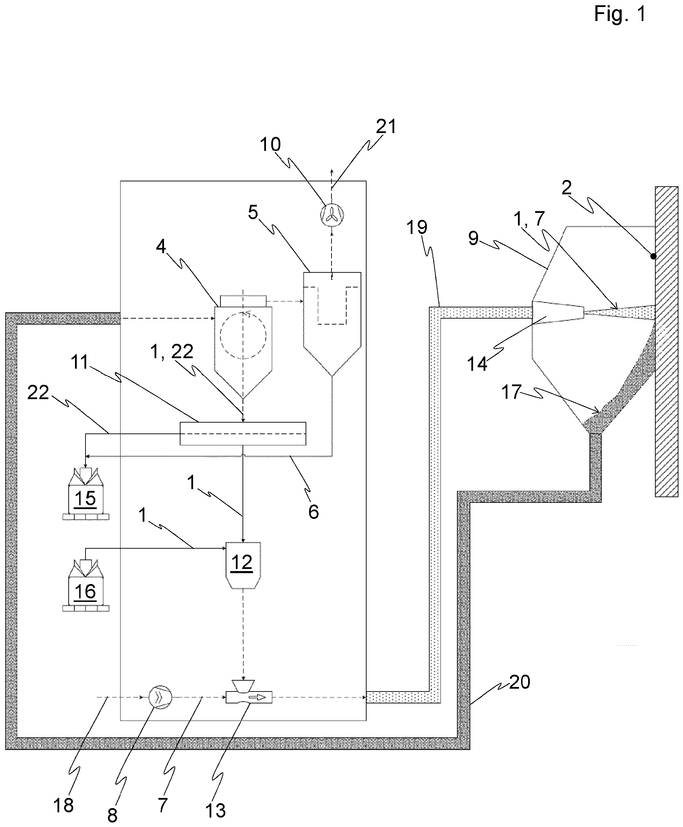

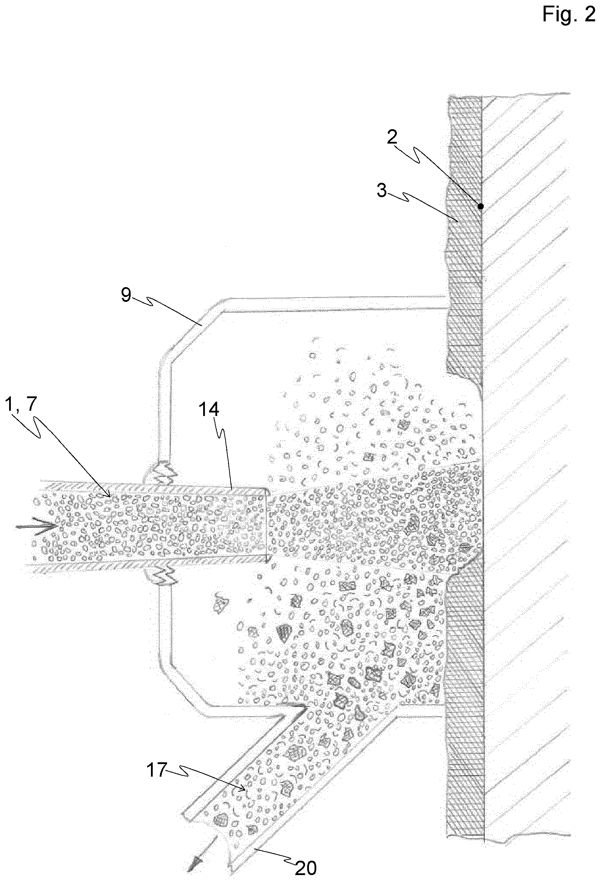

Fig. 1 zeigt ein Fließschema einer Ausführungsform eines erfindungsgemäßen Verfahrens zum Druckluftstrahlen mit mindestens einem festen Strahlmittel, um mindestens eine Oberfläche 2 zu behandeln, insbesondere um die mindestens eine Oberfläche 2 von Verunreinigung 3 (vgl. Fig. 2) zu reinigen, wobei als das mindestens eine feste Strahlmittel mindestens ein Leichtstoffgranulat mit Leichtstoffgranulatpartikeln verwendet wird, wobei die Leichtstoffgranulatpartikel eine hohle und/oder schaumartige Struktur aufweisen. Im gezeigten Ausführungsbeispiel handelt es sich bei den Leichtstoffgranulatpartikeln um geschlossenzellig geblähte/expandierte Perlitsandpartikel 1. Analog illustriert Fig. 1 eine Ausführungsform einer Vorrichtung zum Druckluftstrahlen mit mindestens einem festen Strahlmittel, um die mindestens eine Oberfläche 2 zu behandeln, insbesondere um die mindestens eine Oberfläche 2 von Verunreinigung 3 zu reinigen, wobei die Vorrichtung zur Durchführung des erfindungsgemäßen Verfahrens eingerichtet ist. Bzw. illustriert Fig. 1 eine Ausführungsform eines Systems umfassend die Vorrichtung sowie das Leichtstoffgranulat mit geschlossenzellig expandierten Perlitsandpartikeln 1. Die expandierten Perlitsandpartikel 1 werden aus einem Strahlmittelbehälter 12 einem Injektor 13 zugeführt. Im Injektor 13 werden die Perlitsandpartikel 1 Druckluft 7 beigemengt. Die Druckluft 7 wird mittels eines Kompressors 8 erzeugt, der Luft 18 aus der Umgebung ansaugt, und weist im dargestellten Ausführungsbeispiel einen Überdruck von lediglich ca. 3 bar auf.

Aufgrund der geringen Dichte der Perlitsandpartikel 1 reicht dieser Überdruck aus, dass die Perlitsandpartikel 1 von der Druckluft 7 mitgerissen und in einer Zuleitung 19 zu einer Düse 14 transportiert werden. Im dargestellten Ausführungsbeispiel ist die Schüttdichte der expandierten Perlitsandpartikel 1 kleiner gleich 500 g/l.

Aus der Düse 14 tritt nicht nur die Druckluft 7, sondern treten auch die Perlitsandpartikel 1 aus, wobei die Perlitsandpartikel 1 eine - vergleichsweise geringe - (Austritts-)Geschwindigkeit von ca. 110 m/s aufweisen. Die Perlitsandpartikel 1 treffen in weiterer Folge auf die von Verunreinigung 3 zu reinigende Oberfläche 2, wobei die Düse 14 auf die Oberfläche 2 gerichtet ist. Aufgrund des relativ geringen Abstands zwischen Düse 14 und Oberfläche 2 ist eine Auftreffgeschwindigkeit, mit der die Perlitsandpartikel 1 auf der Oberfläche 2 auftreffen nur unwesentlich geringer als die Austrittsgeschwindigkeit.

Aufgrund der geringen Geschwindigkeit der Perlitsandpartikel 1 wird die Oberfläche 2 nicht geschädigt. Gleichzeitig kann aber trotzdem die Verunreinigung 3 abgetragen werden.

Im gezeigten Ausführungsbeispiel weisen die Perlitsandpartikel 1 eine Korngröße kleiner gleich 600 µm auf, was sich für einen großen Bereich von Anwendungen als günstig erweist.

Grundsätzlich kann je nach Anwendung bzw. je nach Empfindlichkeit der zu behandelnden Oberfläche 2, insbesondere auf Basis von Erfahrungswerten, eine optimale Kombination aus Schüttdichte und Korngröße/Körnung gewählt werden. In aufwendigen Versuchen konnten besonders gute Ergebnisse für die Reinigung von Oberflächen 2 auf Fassaden erzielt werden für eine Schüttdichte der Perlitsandpartikel 1 von ca. 150 g/l und eine Körnung von 150 µm bis 550 µm oder für eine Schüttdichte von ca. 200 g/l und eine Körnung von 100 µm bis 400 µm.

Mit abnehmender Schüttdichte sinkt auch die Druckfestigkeit der Perlitsandpartikel 1. Im gezeigten Ausführungsbeispiel ist die Druckfestigkeit der Perlitsandpartikel 1 kleiner gleich 7 N/mm². Dies stellt sicher, dass selbst bei höheren Geschwindigkeiten der Perlitsandpartikel 1 die Oberfläche 2 nicht beschädigt wird, da in diesem Fall beim Aufprall auf der Oberfläche 2 die kinetische Energie durch Zerstörung der Perlitsandpartikel 1 abgebaut wird.

Im gezeigten Ausführungsbeispiel ist die Düse 14 in einem Saugkopf 9 angeordnet. Der Saugkopf 9 ist beim Druckluftstrahlen an die zu reinigende Oberfläche 2 herangeführt und kann diese mit einem Rand berühren, sodass ein Hohlraum durch den Saugkopf 9 und die Oberfläche 2 begrenzt wird, in welchem Hohlraum die Behandlung bzw. der Reinigungsvorgang stattfindet. Der Saugkopf 9 verhindert dabei zunächst, dass die Perlitsandpartikel 1 nach deren Aufprall an der Oberfläche 2 verlorengehen. Stattdessen werden diese "gebrauchten" Perlitsandpartikel 1 aus dem Saugkopf 9 durch eine in den Saugkopf 9 mündende Absaugleitung 20 mittels eines Ventilators 10 abgesaugt.

Durch die auf die Oberfläche 2 auftreffenden Perlitsandpartikel 1 wird, wie gesagt, Verunreinigung 3 von der Oberfläche 2 entfernt bzw. abgetragen, sodass abgetragenes Material 22 entsteht. Dieses abgetragene Material 22 wird gemeinsam mit den "gebrauchten" Perlitsandpartikeln 1 abgesaugt. D.h. es wird ein Materialstrom 17 durch die Absaugleitung 20 abgesaugt, der neben Luft die "gebrauchten" Perlitsandpartikel 1 sowie das abgetragene Material 22 umfasst.

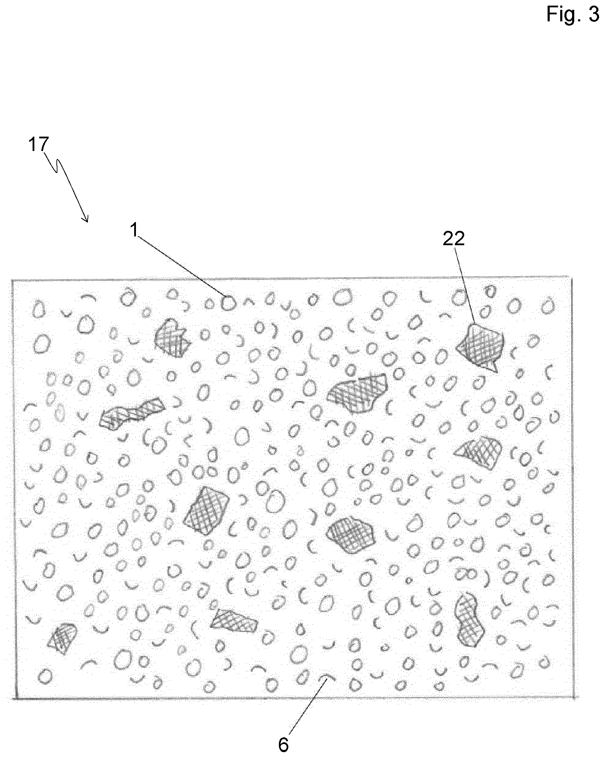

In der Detailansicht der Fig. 3 ist zu erkennen, dass der Materialstrom 17 nicht nur unzerstörte Perlitsandpartikel 1 enthält, sondern auch einen gewissen, typischerweise nicht völlig unvermeidlichen, Anteil an Perlitsandpartikeln 6, die beim Aufprall auf die Oberfläche 2 zerborsten sind und entsprechend sehr kleine, sehr leichte Partikel ausbilden, die typischerweise kein oder nur noch ein geringes Hohlraumvolumen einschließen.

Um unzerstörte Perlitsandpartikel 1 für eine weitere Verwendung beim Druckluftstrahlen wieder zu gewinnen, wird der Materialstrom 17 über die Absaugleitung 20 zunächst einem Fliehkraftabscheider in Form eines Zyklons 4 zugeführt. Auf der Reingasseite des Zyklons 4 entweicht Abluft 21 samt den zerborstenen Perlitsandpartikeln 6, wobei letztere in einem dem Zyklon 4 nachgeschalteten Filter 5 abgeschieden werden und anschließend in einen Abfallbehälter 15 gelangen.

Aufgrund ihrer Masse trennt der Zyklon 4 die unzerstörten Perlitsandpartikel 1 und das abgetragene Material 22 von der Abluft 21 samt den zerborstenen Perlitsandpartikeln 6. Mittels eines nachgeschalteten Siebs 11 findet eine Trennung der unzerstörten Perlitsandpartikel 1 vom typischerweise deutlich größeren abgetragenen Material 22 statt. Das abgetragene Material 22 wird sodann ebenfalls dem Abfallbehälter 15 zugeführt.

Die unzerstörten Perlitsandpartikel 1 stehen hingegen für eine erneute Zuführung zum Injektor 13 bereit und gelangen in den Strahlmittelbehälter 12, der den Injektor 13 mit Perlitsandpartikeln 1 versorgt.

Um sicherzustellen, dass der Injektor 13 stets mit hinreichend vielen Perlitsandpartikeln 1 versorgt wird, ist weiters ein Behälter 16 mit frischem geblähten Perlitsand vorgesehen. Auch aus diesem Behälter 16 können dem Strahlmittelbehälter 12 bei Bedarf Perlitsandpartikel 1 zugeführt werden.

### BEZUGSZEICHENLISTE

- 1: Geblähte Perlitsandpartikel
- 2: Oberfläche
- 3: Verunreinigung
- 4: Zyklon
- 5: Filter
- 6: Zerborstene Perlitsandpartikel
- 7: Druckluft
- 8: Kompressor
- 9: Saugkopf
- 10: Ventilator
- 11: Sieb
- 12: Strahlmittelbehälter
- 13: Injektor
- 14: Düse
- 15: Abfallbehälter
- 16: Behälter mit frischem geblähten Perlitsand
- 17: Materialstrom
- 18: Angesaugte Luft
- 19: Zuleitung
- 20: Absaugleitung
- 21: Abluft
- 22: Abgetragenes Material

## Patentansprüche

1. Verfahren zum Druckluftstrahlen mit mindestens einem festen Strahlmittel, um mindestens eine Oberfläche (2) zu behandeln, insbesondere um die mindestens eine Oberfläche (2) von Verunreinigung (3) zu reinigen, wobei als das mindestens eine feste Strahlmittel mindestens ein Leichtstoffgranulat mit Leichtstoffgranulatpartikeln (1) verwendet wird, wobei die Leichtstoffgranulatpartikel (1) geblähte Partikel sind,
wobei zumindest die Leichtstoffgranulatpartikel (1) nach deren Auftreffen auf der mindestens einen Oberfläche (2) abgesaugt und recycelt werden,
**dadurch gekennzeichnet, dass**
das mindestens eine Leichtstoffgranulat geschlossenzellig expandierten Perlitsand (1) umfasst,
wobei ein überwiegender Anteil der abgesaugten Leichtstoffgranulatpartikel (1) unzerstört vorliegt.

2. Verfahren nach Anspruch 1, **dadurch gekennzeichnet, dass** das mindestens eine Leichtstoffgranulat weiters mindestens ein Blähglas umfasst.

3. Verfahren nach Anspruch 1, **dadurch gekennzeichnet, dass** das es sich bei den Leichtstoffgranulatpartikeln (1) um geschlossenzellig geblähte Perlitsandpartikel handelt.

4. Verfahren nach einem der Ansprüche 1 bis 3, **dadurch gekennzeichnet, dass** die Leichtstoffgranulatpartikel (1) eine Korngröße von kleiner gleich 600 µm, bevorzugt eine Korngröße im Bereich von 100 µm bis 550 pm, besonders bevorzugt eine Korngröße im Bereich von 100 µm bis 400 pm, aufweisen.

5. Verfahren nach einem der Ansprüche 1 bis 4, **dadurch gekennzeichnet, dass** das Leichtstoffgranulat eine Schüttdichte von kleiner gleich 500 g/l, bevorzugt im Bereich von 30 g/l bis 300 g/l, besonders bevorzugt im Bereich von 150 g/l bis 200 g/l, aufweist.

6. Verfahren nach einem der Ansprüche 1 bis 5, **dadurch gekennzeichnet, dass** das Leichtstoffgranulat eine Druckfestigkeit von kleiner gleich 7 N/mm² aufweist.

7. Verfahren nach einem der Ansprüche 1 bis 6, **dadurch gekennzeichnet, dass** Druckluft (7) mit einem Überdruck im Bereich von 2 bar bis 4 bar, vorzugsweise von 2,5 bar bis 3,5 bar, verwendet wird.

8. Verfahren nach einem der Ansprüche 1 bis 7, **dadurch gekennzeichnet, dass** die Leichtstoffgranulatpartikel (1) eine Geschwindigkeit im Bereich von 90 m/s bis 130 m/s, vorzugsweise von 99 m/s bis 121 m/s, aufweisen.

9. Verfahren nach einem der Ansprüche 1 bis 8, **dadurch gekennzeichnet, dass** das Recyceln mittels mindestens eines Zyklons (4) erfolgt, wobei zerborstene Leichtstoffgranulatpartikel (6) mittels mindestens eines nachgeschalteten Filters (5) als Abfall abgeschieden werden.

10. Verfahren nach einem der Ansprüche 1 bis 9, **dadurch gekennzeichnet, dass** der Anteil an zerstörten Leichtstoffgranulatpartikeln (1) bezogen auf die abgesaugten Leichtstoffgranulatpartikel (1) höchstens 10% beträgt, vorzugsweise höchstens 5% beträgt.

11. Verfahren nach einem der Ansprüche 1 bis 10, **dadurch gekennzeichnet, dass** die unzerstörten Leichtstoffgranulatpartikel (1) im Zuge des Recycelns erneut für das Druckluftstrahlen eingesetzt werden.

12. Verfahren nach einem der Ansprüche 1 bis 11, insbesondere nach Anspruch 3, **dadurch gekennzeichnet, dass** zur Abstimmung des Strahlmittels auf die zu behandelnde Oberfläche (2) die Schüttdichte des geschlossenzellig expandierten Perlitsands (1) gezielt eingestellt wird.

## Claims

1. Method for compressed air blasting using at least one solid blasting agent in order to treat at least one surface (2), in particular in order to clean the at least one surface (2) from contamination (3), wherein at least one lightweight granulate with lightweight granulate particles (1) is used as the at least one solid blasting agent, wherein the lightweight granulate particles (1) are expanded particles,
wherein at least the lightweight granulate particles (1) are suctioned off and recycled after they have struck the at least one surface (2),
**characterised in that**
the at least one lightweight granulate comprises closed-cell expanded perlite sand (1),
wherein a predominant proportion of the suctioned-off lightweight granulate particles (1) is undestroyed.

2. Method according to claim 1, **characterised in that** the at least one lightweight granulate further comprises at least one expanded glass.

3. Method according to claim 1, **characterised in that** the lightweight granulate particles (1) are closed-cell expanded perlite sand particles.

4. Method according to any one of claims 1 to 3, **characterised in that** the lightweight granulate particles (1) have a particle size of less than or equal to 600 µm, preferably a particle size in the range from 100 µm to 550 µm, most preferably a particle size in the range from 100 µm to 400 µm.

5. Method according to any one of claims 1 to 4, **characterised in that** the lightweight granulate has a bulk density of less than or equal to 500 g/l, preferably in the range from 30 g/l to 300 g/l, most preferably in the range from 150 g/l to 200 g/l.

6. Method according to any one of claims 1 to 5, **characterised in that** the lightweight granulate has a compressive strength of less than or equal to 7 N/mm².

7. Method according to any one of claims 1 to 6, **characterised in that** compressed air (7) with an overpressure in the range from 2 bar to 4 bar, preferably from 2.5 bar to 3.5 bar, is used.

8. Method according to any one of claims 1 to 7, **characterised in that** the lightweight granulate particles (1) have a velocity in the range from 90 m/s to 130 m/s, preferably from 99 m/s to 121 m/s.

9. Method according to any one of claims 1 to 8, **characterised in that** the recycling is carried out by means of at least one cyclone (4), wherein crushed lightweight granulate particles (6) are separated as waste by means of at least one downstream filter (5).

10. Method according to any one of claims 1 to 9, **characterised in that** the proportion of destroyed lightweight granulate particles (1) relative to the suctioned-off lightweight granulate particles (1) is at most 10%, preferably at most 5%.

11. Method according to any one of claims 1 to 10, **characterised in that** the undestroyed lightweight granulate particles (1) are reused for compressed air blasting during the recycling.

12. Method according to any one of claims 1 to 11, in particular according to claim 3, **characterised in that** the bulk density of the closed-cell expanded perlite sand (1) is selectively adjusted to match the blasting agent to the surface (2) to be treated.

## Revendications

1. Procédé de jet d'air comprimé à l'aide au moins d'un agent de grenaillage solide, pour traiter au moins une surface (2), en particulier pour nettoyer la au moins une surface (2) d'impuretés (3), dans lequel on utilise au moins un granulat de matériau léger avec des particules de granulat de matériau léger (1) comme le au moins un agent de grenaillage solide, dans lequel les particules de granulat de matériau léger (1) sont des particules expansées,
dans lequel au moins les particules de granulat de matériau léger (1) sont aspirées et recyclées après leur impact sur la au moins une surface (2),
**caractérisé en ce que**
le au moins un granulat de matériau léger comprend du sable perlitique (1) expansé à cellules fermées,
dans lequel une part prépondérante des particules de granulat de matériau léger (1) aspirées est non détruite.

2. Procédé selon la revendication 1, **caractérisé en ce que** le au moins un granulat de matériau léger comprend en outre au moins un verre expansé.

3. Procédé selon la revendication 1, **caractérisé en ce que** les particules de granulat de matériau léger (1) sont des particules de sable perlite expansé à cellules fermées.

4. Procédé selon l'une quelconque des revendications 1 à 3, **caractérisé en ce que** les particules de granulat de matériau léger (1) présentent une granulométrie inférieure ou égale à 600 µm, de préférence une granulométrie comprise entre 100 µm et 550 µm, le plus préférentiellement une granulométrie comprise entre 100 µm et 400 µm.

5. Procédé selon l'une quelconque des revendications 1 à 4, **caractérisé en ce que** le granulat de matériau léger présente une densité apparente inférieure ou égale à 500 g/l, de préférence comprise entre 30 g/l et 300 g/l, le plus préférentiellement comprise entre 150 g/l et 200 g/l.

6. Procédé selon l'une quelconque des revendications 1 à 5, **caractérisé en ce que** le granulat de matériau léger présente une résistance à la compression inférieure ou égale à 7 N/mm².

7. Procédé selon l'une quelconque des revendications 1 à 6, **caractérisé en ce que** de l'air comprimé (7) est utilisé avec une surpression dans la plage de 2 bars à 4 bars, de préférence de 2,5 bars à 3,5 bars.

8. Procédé selon l'une quelconque des revendications 1 à 7, **caractérisé en ce que** les particules de granulat de matériau léger (1) présentent une vitesse comprise dans la plage de 90 m/s à 130 m/s, de préférence de 99 m/s à 121 m/s.

9. Procédé selon l'une quelconque des revendications 1 à 8, **caractérisé en ce que** le recyclage est effectué au moyen d'au moins un cyclone (4), dans lequel des particules de granulat de matériau léger (6) éclatées sont séparées en tant que déchets au moyen d'au moins un filtre (5) monté en aval.

10. Procédé selon l'une quelconque des revendications 1 à 9, **caractérisé en ce que** la part de particules de granulat de matériau léger (1) détruites par rapport aux particules de granulat de matériau léger (1) aspirées est d'au plus 10 %, de préférence d'au plus 5%.

11. Procédé selon l'une quelconque des revendications 1 à 10, **caractérisé en ce que** les particules de granulat de matériau léger (1) non détruites sont réutilisées pour le jet d'air comprimé au cours du recyclage.

12. Procédé selon l'une quelconque des revendications 1 à 11, en particulier selon la revendication 3, **caractérisé en ce que,** pour adapter l'agent de grenaillage à la surface (2) à traiter, la densité apparente du sable perlitique (1) expansé à cellules fermées est ajustée de manière ciblée.
